# EUROPÄISCHE PATENTANMELDUNG

(11) **EP 3 672 370 A1**
(43) Veröffentlichungstag der Anmeldung: **24.06.2020**
(21) Anmeldenummer: 18213894.1
(22) Anmeldetag: 19.12.2018
(51) Int. Cl.: H05B 33/08

(54) **SCHEINWERFER FÜR KRAFTFAHRZEUGE**

(71) Anmelder: ZKW Group GmbH, 3250 Wieselburg (AT)
(72) Erfinder: Steindl, Günter, 1230 Wien (AT); Koller, Jan, 1120 Wien (AT)
(74) Vertreter: Patentanwaltskanzlei Matschnig & Forsthuber OG

(57) **Zusammenfassung**

Ein Scheinwerfer für Kraftfahrzeuge mit einer Stromversorgung für zumindest zwei LED-Zweige (Z1, Z2, Zn), von welchen jeder eine Serienschaltung von LEDs (LED11...LEDlx; LED21...LED2x; LEDn1...LED3x) aufweist und zumindest eine LED jedes Zweiges von einem gesteuerten Schalter (S11...S1x; S21...S2x; Sn1...Snx) überbrückbar ist, jeder LED-Zweig (Z1, Z2, Zn) von einem ihm zugeordneten Tiefsetzsteller (T1, T2, Tn) gespeist wird, wobei die Tiefsetzsteller als Konstantstromquellen ausgebildet sind und eingangsseitig an einer gemeinsamen Zwischenkreisspannung (Uz) liegen, welche von einer an einer Eingangsspannung (Ue) liegenden Spannungsversorgung (H) erzeugt wird, eine Steuereinheit (C) vorgesehen ist, welche in Abhängigkeit von einem gewünschten Lichtbild zur Ansteuerung der Schalter im Sinne einer Pulsweitenmodulation eingerichtet ist, wobei innerhalb einer PWM-Periode die Schaltzeitpunkte der LEDs eines Zweiges gegeneinander versetzt sind, wobei die Steuereinheit (C) einen Speicher (S) aufweist, in welchem eine Zuordnung der von den LEDs des Matrixscheinwerfers zu beleuchtenden Raumwinkeln hinterlegt ist, der Steuereinheit Anforderungssignale (d) betreffend das aktuell gewünschte Lichtbild seitens des Fahrzeuges zugeführt sind, und die Steuereinheit (C) dazu eingerichtet ist, aus der aus dem Speicher (S) stammenden Information in Kombination mit der in dem Matrix-IC (M) vorhandenen Information der LED-Zuordnung zu den jeweiligen gesteuerten Schaltern (S11...S1x; S21...S2x; Snl...Snx) und dem jeweiligen Tastgrad, welcher die Helligkeit der einzelnen LEDs im Fall des Dimmens bestimmt, die maximale Anzahl der jeweils aktiven LEDs jedes Zweiges (Z1, Z2, Zn) und somit auch die maximal auftretende Flussspannung dieser Zweige zu berechnen und daraus den LED-Zweig mit den meisten aktiven LEDs zu wählen, welcher die minimal notwendige Zwischenkreisspannung (Zu) vorgibt und diese Information als Befehlssignal (b) der Spannungsversorgung (H) zuzuführen, um diesen dynamisch auf den jeweils erforderlichen Wert der Zwischenkreisspannung zu stellen.

## Beschreibung

Die Erfindung bezieht sich auf einen Scheinwerfer für Kraftfahrzeuge mit einer Stromversorgung für zumindest zwei LED-Zweige, von welchen jeder eine Serienschaltung von LEDs aufweist und zumindest eine LED jedes Zweiges von einem gesteuerten Schalter überbrückbar ist, jeder LED-Zweig von einem ihm zugeordneten Tiefsetzsteller gespeist wird, wobei die Tiefsetzsteller als Konstantstromquellen ausgebildet sind und eingangsseitig an einer gemeinsamen Zwischenkreisspannung liegen, welche von einer an einer Eingangsspannung liegenden Spannungsversorgung erzeugt wird und eine Steuereinheit vorgesehen ist, welche in Abhängigkeit von einem gewünschten Lichtbild zur Ansteuerung der Schalter im Sinne einer Pulsweitenmodulation eingerichtet ist, wobei innerhalb einer PWM-Periode die Schaltzeitpunkte der LEDs eines Zweiges gegeneinander versetzt sind

Insbesondere bei Fahrzeugscheinwerfern auf Basis adaptiver LED-Matrix-Systeme verwendet man sogenannte Überbrückungsschalter zum individuellen Dimmen bzw. Kurzschließen einzelner LEDs eines Zweiges. Diese Schalter befinden sich beispielsweise unmittelbar bei den jeweiligen LEDs oder aber auch oft auf einer eigenen Leiterplatte und sie werden über eine Kommunikationsschnittstelle von einer Steuereinheit angesteuert.

Kern einer Steuereinheit ist meist ein sogenannter Matrix-IC, in welchen auch die oben genannten Überbrückungsschalter integriert sein können. Die Speisung der einzelnen Zweige, welche auch Stränge genannt werden können, erfolgt mit Hilfe hysteretisch geregelter Tiefsetzsteller (Abwärtsregler), die als hochdynamische Stromquellen ausgebildet sind. Die einzelnen Tiefsetzsteller werden von einer gemeinsamen Zwischenkreisspannung versorgt, deren Spannungswert zumindest der Summe aller Flussspannungen der in Serie geschalteten LEDs jenes Zweiges mit der größten Anzahl von LEDs entsprechen muss, wobei in der Praxis oft jeder Zweig die gleiche Anzahl an LEDs aufweist.

Die Steuereinheit steuert die Schalter in Abhängigkeit von einem gewünschten Lichtbild im Sinne einer Pulsweitenmodulation an, wobei es empfehlenswert ist, innerhalb einer PWM-Periode die Schaltzeitpunkte der LEDs eines Zweiges gegeneinander zu versetzen.

Die Zwischenkreisspannung, die beispielsweise in einem Bereich von 12 bis 42 Volt, aber auch darunter oder darüber liegen kann, wird von einer geregelten bzw. gesteuerten Spannungsversorgung bereitgestellt, meist einem Hochsetzsteller (Aufwärtsregler). Die Eingangsspannung dieser Spannungsversorgung kann beispielsweise die Bordspannung des Kraftfahrzeuges sein. Im Laufe der sich dynamisch ändernden Lichtverteilung eines Scheinwerfers wird vor allem bei Lichtszenarien, bei welchen im Mittel nur wenige LEDs der Zweige aktiv und die restlichen LEDs überbrückt sind, die Spannungsversorgung, welche die Zwischenkreisspannung erzeugt, stärker belastet, was auch für die den jeweiligen Zweigstrom liefernden und regelnden Tiefsetzsteller zutrifft. Man kann das Problem auch so beschreiben, dass in vielen Fällen die Zwischenkreisspannung auch bei einem Versetzen der Schaltzeitpunkte unnötig hoch ist, in anderen Fällen, in welchen sämtliche LEDs eines Zweiges leuchten sollen, jedoch die hohe Zwischenkreisspannung benötigt wird.

Eine Aufgabe der Erfindung liegt darin, eine Lösung anzugeben, welche dem oben genannten Problem entgegenwirkt und dadurch eine geringere Belastung der Stromversorgungen ermöglicht sowie den Energieverbrauch verringert.

Diese Aufgabe wird mit einem Scheinwerfer der eingangs genannten Art gelöst, bei welcher erfindungsgemäß die Steuereinheit einen Speicher aufweist, in welchem eine Zuordnung der von den LEDs des Matrixscheinwerfers zu beleuchtenden Raumwinkeln hinterlegt ist, der Steuereinheit Anforderungssignale betreffend das aktuell gewünschte Lichtbild seitens des Fahrzeuges zugeführt sind, und die Steuereinheit dazu eingerichtet ist, aus der aus dem Speicher stammenden Information in Kombination mit der in dem Matrix-IC vorhandenen Information der LED-Zuordnung zu den jeweiligen gesteuerten Schaltern und dem jeweiligen Tastgrad, welcher die Helligkeit der einzelnen LEDs im Fall des Dimmens bestimmt, die maximale Anzahl der jeweils aktiven LEDs jedes Zweiges und somit auch die maximal auftretende Flussspannung dieser Zweige zu berechnen und daraus den LED-Zweig mit den meisten aktiven LEDs zu wählen, welcher die minimal notwendige Zwischenkreisspannung vorgibt und diese Information als Befehlssignal der Spannungsversorgung zuzuführen, um diese dynamisch auf den jeweils erforderlichen Wert der Zwischenkreisspannung zu stellen.

Dank der Erfindung können Verluste in dem Scheinwerfer minimiert werden, d.h. es lässt sich ein hoher Wirkungsgrad erzielen.

Da die Temperatur der LEDs bzw. deren Module eine große Rolle bei der möglichen Optimierung des Wirkungsgrades spielt, kann es von Vorteil sein, wenn in einem Speicher der Steuerung ein Zusammenhang zwischen der der Temperatur des LED-Moduls und der Flussspannung einer LED abgespeichert ist, der Steuerung der jeweils aktuelle Wert der Temperatur des LED-Moduls zugeführt ist, und die Steuereinheit dazu eingerichtet ist, nach Zugriff auf den Speicher eine der Temperatur entsprechende Korrektur der Befehle bezüglich der Zwischenkreisspannung vornehmen.

Eine vorteilhafte Weiterbildung zeichnet sich dadurch aus, dass die Spannungsversorgung als Hochsetzsteller ausgebildet ist.

Die Erfindung ist im Folgenden an Hand beispielsweiser Ausführungsformen näher beschrieben, welche zusammen mit anderen Darstellungen des technischen Gebietes in der Zeichnung veranschaulicht sind. In dieser zeigen
Fig. 1 ein Prinzipschaltbild einer Stromversorgung für LED-Zweige eines adaptiven Scheinwerfers,
Fig. 2 ein Spannungs- und Schaltdiagramm der Ansteuerung eines Zweiges mit zeitlich äquidistant verteilten Schaltzeitpunkten und gleichen Tastgraden (duty cycles),
Fig. 3 ein Spannungs- und Schaltdiagramm entsprechend der Fig. 2 jedoch mit unterschiedlichen Tastgraden (duty cycles),
Fig. 4 eine beispielsweise, abgespeicherte Abhängigkeit der anzunehmenden Flussspannung Vf in Abhängigkeit von der Temperatur Tm eines LED-Moduls und
Fig. 5 ein Ablaufdiagramm, welches sich auf eine beispielsweise erfindungsgemäße Funktion der Steuerung bezieht.

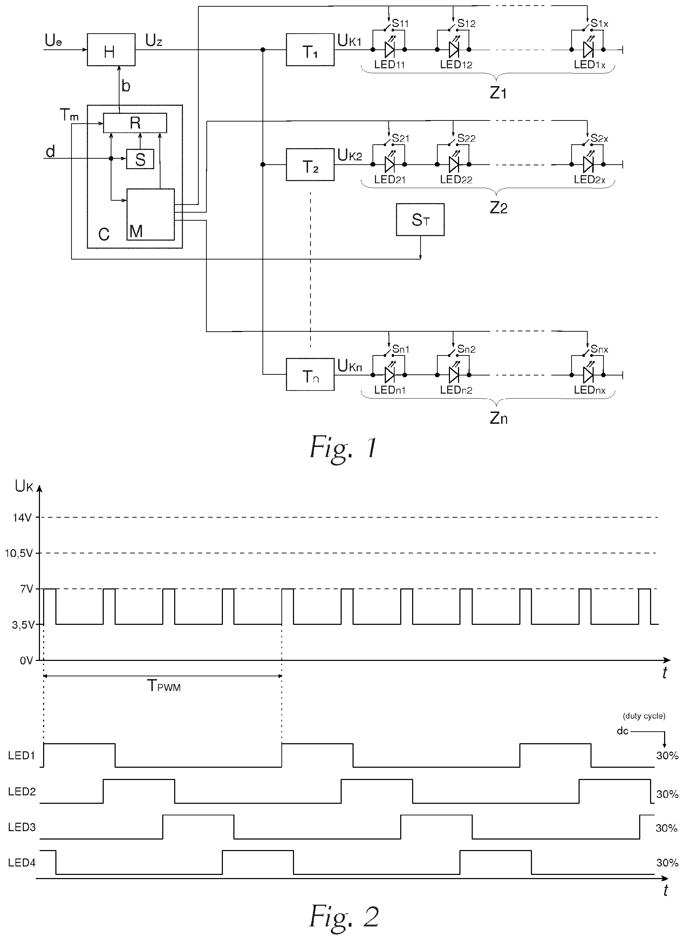

Gemäß **Fig. 1** ist eine Anzahl **n** von LED-Zweigen **Z1, Z2, Zn**, in dem gezeigten Beispiel sind der Einfachheit halber bloß drei Zweige dargestellt, ausgehend von einer Eingangsspannung **Ue**, welche beispielsweise die Bordspannung des Kraftfahrzeuges sein kann, mit Strom zu versorgen. Jeder der Zweige Z1, Z2, Zn besteht aus der Serienschaltung einer Anzahl x von LEDs, wobei als Beispiel wiederum der Einfachheit halber lediglich drei **LEDs LED11...LED1x; LED21...LED2x; LED31...LED3x** gezeigt sind. Im Beispiel enthalten die Zweige Z1, Z2, Zn je gleich viele LEDs, nämlich x LEDs, die LED Anzahl je Zweig könnte aber unterschiedlich sein.

Im vorliegenden Beispiel bilden die insgesamt n.x-LEDs die Matrix eines Scheinwerfers, der auf Basis adaptiver LED-Matrix-Systeme arbeitet.

In jedem Zweig können LEDs, zumindest eine LED je Zweig, von Schaltern überbrückt sein, in diesem Fall sind alle LEDs eines Zweiges je von einem Schalter **S11...S1x; S21...S2x;** Snl...Snx überbrückbar, d.h. der entsprechenden LED ist ein Schalter parallelgeschaltet. Die Schalter, sogenannte Überbrückungsschalter, dienen zum individuellen Dimmen bzw. Kurzschließen einzelner LEDs eines Zweiges. Die Schalter befinden sich beispielsweise unmittelbar bei den jeweiligen LEDs oder aber auch oft auf einer eigenen Leiterplatte und sie werden über eine Kommunikationsschnittstelle von einer Steuereinheit angesteuert.

Jeder LED-Zweig Z1, Z2, Zn wird von einem ihm zugeordneten Tiefsetzsteller **T1, T2, Tn** gespeist, wobei die Tiefsetzsteller hysteretisch geregelter Tiefsetzstelle (Abwärtsregler) sind, die als hochdynamische Stromquellen ausgebildet sind und eingangsseitig an einer gemeinsamen Zwischenkreisspannung **Uz** liegen, welche von einer an der Eingangsspannung **Ue** liegenden Spannungsversorgung **H** erzeugt wird.

Des Weiteren ist eine Steuereinheit **C** vorgesehen ist, welche in Abhängigkeit von einem gewünschten Lichtbild des Scheinwerfers zur Ansteuerung der Schalter S1...S1x; S21...S2x; Snl...Snx im Sinne einer Pulsweitenmodulation eingerichtet ist, wobei innerhalb einer PWM-Periode die Schaltzeitpunkte der LEDs eines Zweiges gegeneinander versetzt sind, was weiter unten näher gezeigt und erläutert wird.

Kern der Steuereinheit C ist ein sogenannter Matrix-IC, in Fig. 1 mit **M** bezeichnet, in welchen auch die Überbrückungsschalter integriert sein können, die hier jedenfalls zur klareren Darstellung bei den zugehörigen LEDs eingezeichnet sind. Die Zwischenkreisspannung, welche alles Tiefsetzsteller gemeinsamen versorgt, besitzt einen Spannungswert, welcher zumindest der Summe aller Flussspannungen der in Serie geschalteten LEDs jenes Zweiges mit der größten Anzahl von LEDs entsprechen muss, wobei in der Praxis oft jeder Zweig die gleiche Anzahl an LEDs aufweist.

Die Zwischenkreisspannung Uz, in einem Bereich von beispielsweise 12 bis 42 Volt, wird in Abhängigkeit von der höchsten LED-Anzahl in einem Zweig gewählt und sie wird von einer geregelten bzw. gesteuerten Spannungsversorgung **H**, meist einem Hochsetzsteller (Aufwärtsregler), bereitgestellt. Die Eingangsspannung Ue dieser Spannungsversorgung kann beispielsweise die Bordspannung des Kraftfahrzeuges sein.

Seitens des Fahrzeuges bzw. deren Elektronik werden der Steuerung ständig Anforderungssignale **d** zugeführt, welche das aktuelle gewünschte Lichtbild betreffen. Im Laufe der sich dynamisch ändernden Lichtverteilung des Scheinwerfers wird vor allem bei Lichtszenarien, bei welchen im Mittel nur wenige LEDs der Zweige aktiv und die restlichen LEDs überbrückt sind, die Spannungsversorgung, welche die Zwischenkreisspannung Uz erzeugt, stärker belastet, was auch für die den jeweiligen Zweigstrom liefernden und regelnden Tiefsetzsteller T1, T2, Tn zutrifft. Mit anderen Worten ist in vielen Fällen die Zwischenkreisspannung Uz unnötig hoch, doch wird in Fällen, in welchen sämtliche LEDs eines Zweiges leuchten sollen, die hohe Zwischenkreisspannung Uz benötigt. Die an der gesamten Serienschaltung von LEDs eines Zweiges ist in Fig. 1 mit **Uk1, Uk2, Ukn** bezeichnet.

**Fig. 2** zeigt ein Spannungs- und Schaltdiagramm der Ansteuerung eines Zweiges mit vier in Serie geschalteten LEDs mit zeitlich äquidistant verteilten Schaltzeitpunkten. Zur Vereinfachung wird in diesem und in folgenden Beispielen eine Flussspannung (Vorwärtsspannung) von 3,5 V angenommen, wobei die Flussspannung bei derzeit am Markt befindlichen LEDs je nach Type (insbesondere der Farbe, IR, UV) etwa zwischen 1,2 bis 4,5 V liegt. Bei einem Zweig mit vier nicht kurzgeschlossenen, d.h. durch Schalter überbrückten LEDs, läge die maximal erforderliche Zweigspannung somit bei 4*3,5 = 14 V. In Fig.2 sind die vier LEDs mit LED1 bis LED4 bezeichnet.

Das obere Diagramm der Fig. 2 zeigt den zeitlichen Verlauf der Spannung Uk des Zweiges mit den vier LEDs für eine PWM-Periode und in dem unteren Diagramm sind die zugehörigen Schaltzustände der vier LEDs gezeigt, wobei man erkennt, dass jede LED mit einem Tastgrad (Duty Cycle) von 30% geschaltet wird und die Schaltzeitpunkte der LEDs gleichmäßig zeitlich versetzt sind. Man erkennt, dass man bei Wahl geeigneter Schaltzeitpunkte maximal eine Zweigspannung Uk von 7,5 V benötigt. Lägen die Schaltzeitpunkte hingegen stochastisch verteilt, wäre jedenfalls zu bestimmten Zeiten die maximale Zweigspannung von 14 V (strichlierte Linie) erforderlich.

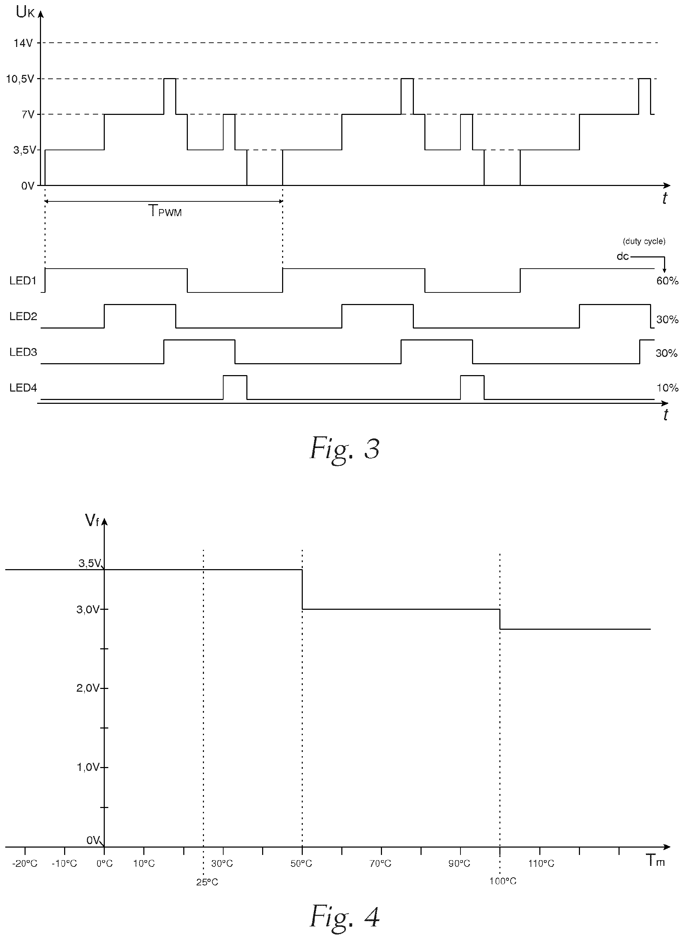

**Fig. 3** zeigt eine Darstellung analog zu Fig. 3 jedoch mit unterschiedlichem Tastgrad (Duty Cycle) der einzelnen LEDs innerhalb einer PWM-Periode, was bedeutet, dass die vier LEDs unterschiedlich gedimmt werden und daher unterschiedlich hell erscheinen. In dem gezeigten Beispiel wird für einen kurzen Zeitraum eine Zweigspannung Uk von 10,5 V benötigt, ein Wert, der aber noch immer unterhalb der Maximalspannung von 14 V liegt.

Die Erfindung geht nun davon aus, die Anzahl der maximal eingeschalteten LEDs der einzelnen Zweige vorherzusagen, daraus die maximal benötigte Zweigspannung der einzelnen Zweige zu bestimmen und dementsprechend die Zwischenkreisspannung Zu einzustellen. Dies wird im Folgenden näher erläutert.

Zum Erzeugen eines gewünschten Lichtbildes mit einem Matrixscheinwerfer werden einzelne Bereiche des Lichtbildes ausgeblendet bzw. Segmente der LED-Matrix abgeschaltet oder gedimmt. Dies ist z.B. bei besonderen Ausleuchtungen des Verkehrsraums oder beim gezielten Ausblenden eines kleinen Bereiches, der einen entgegenkommenden Verkehrsteilnehmer oder einen Fußgänger betrifft, der Fall und dementsprechend werden die Überbrückungsschalter der LEDs angesteuert. Wie bereits oben erwähnt, werden die erforderlichen Anforderungssignale d der Steuerung ständig seitens des Fahrzeuges zugeführt.

In der Steuereinheit C ist eine Zuordnung der von den LEDs des Matrixscheinwerfers zu beleuchtenden Raumwinkeln in einem Speicher **S** hinterlegt, wobei diese Zuordnung eine spezifische für jeden Scheinwerfer ist. Aus dieser aus dem Speicher S stammenden Information in Kombination mit der in dem Matrix-IC M vorhandenen Information der LED-Zuordnung zu den jeweiligen Überbrückungsschaltern und dem jeweiligen Tastgrad, welcher die Helligkeit der einzelnen LEDs im Fall des Dimmens bestimmt, ergibt sich die maximale Anzahl der jeweils aktiven LEDs eines Zweiges und somit auch die maximal auftretende Flussspannung dieses Zweiges. Wenn diese Berechnung nach einem dafür geeigneten Algorithmus nun für alle LED-Zweige erfolgt, kann man daraus den LED-Zweig mit den meisten aktiven LEDs bestimmen, welcher demnach die minimal notwendige Zwischenkreisspannung vorgibt. Diese Information, die z.B. in einer Recheneinheit **R** ermittelt werden kann und in Fig. 1 durch ein Befehlssignal b angedeutet ist, wird dem Hochsetzsteller H zugeführt, der sodann dynamisch auf den jeweils erforderlichen Wert der Zwischenkreisspannung Uz eingestellt wird.

Eine weitere Verbesserung der erfindungsgemäßen Lösung lässt sich erreichen, wenn man berücksichtigt, dass sich die Flussspannung mit der Temperatur, genauer gesagt der Sperrschichttemperatur ändert, wobei eine Temperaturabsenkung zu einer Erhöhung der Flussspannung führt. Da man die Sperrschichttemperatur nicht unmittelbar erfassen kann, misst man die Temperatur beispielsweise der LED-Module an geeigneter Stelle, wobei man den aufbauspezifischen Zusammenhang zwischen der Flussspannung und der gemessenen Temperatur experimentell annähernd bestimmen kann. Bei niedrigen Temperaturen muss man vom der höchsten Flussspannung (worst case) ausgehen, bei höheren Temperaturen kann eine niedrigere Flussspannung angenommen werden. Man legt z.B. in einem Speicherbaustein der Steuerung C eine Zuordnung der Flussspannung **Vf** zu der Temperatur **Tm** des LED-Moduls fest und kann dann in der Steuerung C eine der Temperatur entsprechende Korrektur der Befehle b bezüglich der Zwischenkreisspannung Uz vornehmen. Fig. 1 zeigt schematisch einen Temperatursensor **ST**, welcher einem LED-Modul zugeordnet ist. Unter dem Begriff LED-Modul ist im Zusammenhang mit dieser Erfindung eine einzelne LED-Anordnung, z.B. LED und Kühlkörper, oder die Anordnung einer Kette von LEDs oder auch eine gesamte LED-Matrix zu verstehen. Wesentlich ist jedenfalls, dass der Temperatursensor eine für die LED-Temperatur repräsentative Größe liefert, wobei der Temperatursensor auch mehrere Sensoren umfassen kann, um einen Mittelwert der nicht gleichen Temperaturen einzelner LED-Module zu erfassen. Bei einem gemeinsamen Kühlkörper kann auch die Temperatur dieses Kühlkörpers erfasst werden. **Fig. 4** zeigt ein Beispiel für eine abgespeicherte Abhängigkeit der anzunehmenden Flussspannung Vf in Abhängigkeit von der Temperatur Tm eines LED-Moduls.

Es sollte dem Fachmann klar sein, dass die in Fig. 1 in den Block der Steuerung C eingezeichneten weiteren Blöcke, nämlich die Recheneinheit R, der Speicher S und der Matrix-IC M in erster Linie als Funktionsblöcke und nicht notwendigerweise als physisch vorhandene getrennte Einheiten anzusehen sind. Tastsächlich könnte die Steuereinheit C auch als "Ein-Chip"-Lösung aufgebaut sein.

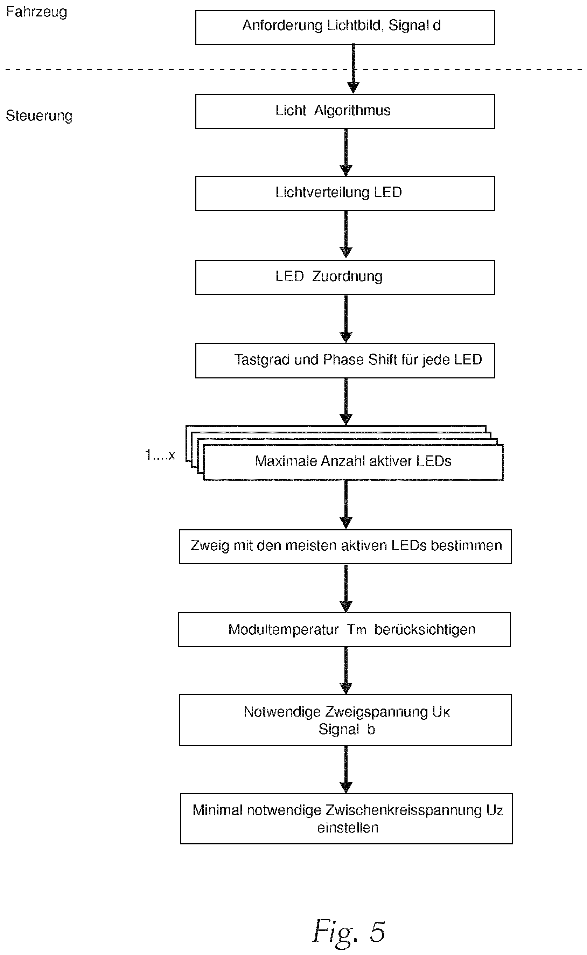

Die oben beispielsweise beschriebene erfindungsgemäße Funktion der Steuerung S ist in dem Ablaufdiagramm der **Fig. 5** gezeigt. Seitens des Fahrzeuges erfolgt an die Steuereinheit C über das Signal d eine Anforderung für ein bestimmtes Lichtbild, das auf der Fahrbahn erzeugt werden soll. Dem vorhandenen Algorithmus entsprechend wird sodann anhand der Lichtverteilung der LEDs die LED-Zuordnung für das gewünschte Lichtbild ermittelt sowie der Tastgrad und die Phasenverschiebung (Phase Shift) für jede LED. Man erhält für jeden Zweig 1...x die maximale Anzahl aktiver LEDs und es wird jener Zweig mit den meisten aktiven LEDs ermittelt. Es kann nun die Modultemperatur Tm berücksichtigt werden und in der Folge die notwendige Zweigspannung Uk, vorauf das Befehlssignal b für die Spannungsversorgung H abgegeben wird.

## Patentansprüche

1. Scheinwerfer für Kraftfahrzeuge mit einer Stromversorgung für zumindest zwei LED-Zweige (Z1, Z2, Zn), von welchen jeder eine Serienschaltung von LEDs (LED11...LED1x; LED21...LED2x; LEDn1...LED3x) aufweist und zumindest eine LED jedes Zweiges von einem gesteuerten Schalter (S11...S1x; S21...S2x; Snl...Snx) überbrückbar ist, jeder LED-Zweig (Z1, Z2, Zn) von einem ihm zugeordneten Tiefsetzsteller (T1, T2, Tn) gespeist wird, wobei die Tiefsetzsteller als Konstantstromquellen ausgebildet sind und eingangsseitig an einer gemeinsamen Zwischenkreisspannung (Uz) liegen, welche von einer an einer Eingangsspannung (Ue) liegenden Spannungsversorgung (H) erzeugt wird und eine Steuereinheit (C) vorgesehen ist, welche in Abhängigkeit von einem gewünschten Lichtbild zur Ansteuerung der Schalter im Sinne einer Pulsweitenmodulation eingerichtet ist, wobei innerhalb einer PWM-Periode die Schaltzeitpunkte der LEDs eines Zweiges gegeneinander versetzt sind,
**dadurch gekennzeichnet, dass**
die Steuereinheit (C) einen Speicher (S) aufweist, in welchem eine Zuordnung der von den LEDs des Matrixscheinwerfers zu beleuchtenden Raumwinkeln hinterlegt ist, der Steuereinheit Anforderungssignale (d) betreffend das aktuell gewünschte Lichtbild seitens des Fahrzeuges zugeführt sind, und die Steuereinheit (C) dazu eingerichtet ist, aus der aus dem Speicher (S) stammenden Information in Kombination mit der in dem Matrix-IC (M) vorhandenen Information der LED-Zuordnung zu den jeweiligen gesteuerten Schaltern (S11...S1x; S21...S2x; Sn1..Snx) und dem jeweiligen Tastgrad, welcher die Helligkeit der einzelnen LEDs im Fall des Dimmens bestimmt, die maximale Anzahl der jeweils aktiven LEDs jedes Zweiges (Z1, Z2, Zn) und somit auch die maximal auftretende Flussspannung dieser Zweige zu berechnen und daraus den LED-Zweig mit den meisten aktiven LEDs zu wählen, welcher die minimal notwendige Zwischenkreisspannung (Uz) vorgibt und diese Information als Befehlssignal (b) der Spannungsversorgung (H) zuzuführen, um diese dynamisch auf den jeweils erforderlichen Wert der Zwischenkreisspannung (Uz) zu stellen.

2. Scheinwerfer nach Anspruch 1, **dadurch gekennzeichnet, dass** in einem Speicher (T) der Steuerung (C) ein Zusammenhang zwischen der der Temperatur (Tm) des LED-Moduls und der Flussspannung (Vf) einer LED abgespeichert ist, der Steuerung (C) der jeweils aktuelle Wert der Temperatur des LED-Moduls zugeführt ist, und die Steuereinheit (C) dazu eingerichtet ist, nach Zugriff auf den Speicher (T) eine der Temperatur entsprechende Korrektur der Befehle (b) bezüglich der Zwischenkreisspannung (Uz) vornehmen.

3. Scheinwerfer nach Anspruch 1 oder 2, **dadurch gekennzeichnet, dass** die Spannungsversorgung (H) als Hochsetzsteller ausgebildet ist.
